# EUROPEAN PATENT APPLICATION

(11) **EP 1 980 969 A2**
(43) Date of publication of application: **15.10.2008**
(21) Application number: 08153070.1
(22) Date of filing: 20.03.2008
(51) Int. Cl.: G06F 21/00

(54) **Mobile terminal and method for displaying detailed information about DRM contents**

(30) Priority: 10.04.2007 KR 20070035293
(71) Applicant: Samsung Electronics Co., Ltd., Suwon-si, Gyeonggi-Do (KR)
(72) Inventor: Lee, Kyung Keun c/o Samsung Electronics Co., Ltd., Gyeonggi-do (KR); Kwon, Yong Dae c/o Samsung Electronics Co., Ltd., Gyeonggi-do (KR)
(74) Representative: Grünecker, Kinkeldey, Stockmair & Schwanhäusser Anwaltssozietät

(57) **Abstract**

The present invention provides a mobile terminal and method for display of detailed information regarding digital rights management (DRM) contents in an intuitive and direct manner for the user. The detailed information includes information items that are attributes of the DRM contents (such as types, sizes, and created dates) or usage rights in licenses of the DRM contents (rights to play, display, execute, print, and export the DRM contents). Those information items associated with selected DRM contents are displayed using text or icons.

## Description

### BACKGROUND OF THE INVENTION

### Field of the Invention

The present invention relates generally to a mobile terminal and, more particularly, to a mobile terminal and method that can display detailed information regarding digital rights management (DRM) contents during display of a list of said DRM contents.

### Description of the Related Art

Digital rights management (DRM) relates to protection and management of copyrighted digital content. Using cryptography, DRM aims to achieve secure delivery of various contents from content providers to users, and to prevent unauthorized redistribution of contents delivered to users. DRM supports the full life cycle of digital content including creation, distribution, usage and retirement both in on-line and off-line states.

With advances in communication technologies, a user in motion can readily carry a mobile terminal and send and receive phone calls at most times and places. Advanced mobile terminals support various supplementary functions such as text message and image transmission, execution of application programs, and display of DRM content.

A mobile terminal includes a display unit for displaying various information that is stored internally or received from external sources. The display unit is used to provide visual information for control of the mobile terminal. For example, the display unit is used to perform at least one of the functions selected from the group consisting of enter a phone number for an outgoing call, display a message window for composing or viewing a text message, and display operation states of the mobile terminal.

In particular, when a plurality of DRM contents are stored in a memory unit, a list of the plurality of DRM contents is normally displayed on the display unit in response to a search request for a desired DRM content from the user. In conventional DRM content display, the user may only check the presence of a particular DRM content, and may not be able to obtain detailed information regarding stored DRM content.

### SUMMARY OF THE INVENTION

The present invention provides a mobile terminal and method that can display detailed information regarding digital rights management (DRM) content in an efficient and visual manner.

In accordance with an embodiment of the present invention, an information display method for at least one DRM content stored in a mobile terminal having a display unit includes: displaying a content list comprising the at least one stored DRM content on the display unit; and displaying on the display unit detailed information regarding each of the displayed at least one DRM content and licenses of the at least one DRM content in a corresponding zone.

In accordance with another embodiment of the present invention, a mobile terminal for displaying at least one DRM content stored in the mobile terminal includes: a memory unit for storing the at least one DRM content; a display unit for displaying a content list of the stored at least one DRM content; and a control unit for controlling a display operation to display at least one detailed information about the at least one stored DRM content in a corresponding , wherein the at least one detailed information is an item selected from the list consisting of at least one attribute of the at least one DRM content and at least one license of the at least one DRM content.

### BRIEF DESCRIPTION OF THE DRAWINGS

The above and other features and advantages of the present invention will be more apparent from the following detailed description in conjunction with the accompanying drawings, in which:
FIG. 1 illustrates a configuration of a mobile terminal according to an embodiment of the present invention;
FIG. 2 illustrates a screen layout for a display method of detailed DRM content information according to an alternative embodiment of the present invention;
FIG. 3 is a screen representation illustrating display of detailed DRM content information in a collective manner using texts and images according to an embodiment of the present invention;
FIGS. 4A to 4C are screen representations illustrating display of detailed DRM content information in a sliding manner according to an embodiment of the present invention;
FIG. 5 is a screen representation illustrating display of detailed DRM content information using a bubble text according to an embodiment of the present invention;
FIGS. 6A and 6B are screen representation illustrating display of detailed DRM content information in a periodic manner according to an embodiment of the present invention;
FIG. 7 is a screen representation illustrating display of detailed DRM content information using available service icons according to an embodiment of the present invention;
FIGS. 8A and 8B illustrate display of detailed DRM content information using a key input unit according to an embodiment of the present invention; and
FIGS. 9A to 9C illustrate display of detailed DRM content information through changes in brightness and saturation of icons, according to an embodiment of the present invention.

### DETAILED DESCRIPTION OF THE PRESENT INVENTION

Hereinafter, embodiments of the present invention are described in detail with reference to the accompanying drawings. The same reference symbols identify the same or corresponding elements in the drawings. Detailed descriptions of constructions or processes known in the art may be omitted to avoid obscuring the invention with unnecessary detail. Particular terms may be defined to describe the invention in the best manner. Accordingly, the meaning of specific terms or words used in the specification and the claims should not be limited to the literal or commonly employed sense, but should be construed in accordance with the spirit of the invention. The description of the various embodiments is to be construed as exemplary only and does not describe every possible instance of the invention. Therefore, it should be understood that various changes may be made and equivalents may be substituted for elements of the invention.

In the description, digital rights management (DRM) contents refers to at least one DRM content having at least one corresponding detailed information. Further, in the description, said corresponding detailed information item of the at least one DRM content includes a description of the at least one DRM content and at least one license information corresponding to the at least one DRM content. The license information includes restrictions on replay, display, execution, print, export, and transmission through short-range communication of the at least one DRM content.

The mobile terminal of the present invention is a terminal that includes a DRM content player for playing DRM content, and includes any information and communication appliance, and multimedia appliance selected from the group consisting of a mobile communication terminal, a digital broadcast receiving terminal, a personal digital assistant (PDA), a smart phone, an international mobile telecommunications 2000 (IMT 2000) terminal, a wideband code division multiple access (WCDMA) terminal, a global system for mobile communications (GSM)/ general packet radio services (GPRS) terminal, and a universal mobile telecommunications system (UMTS) terminal.

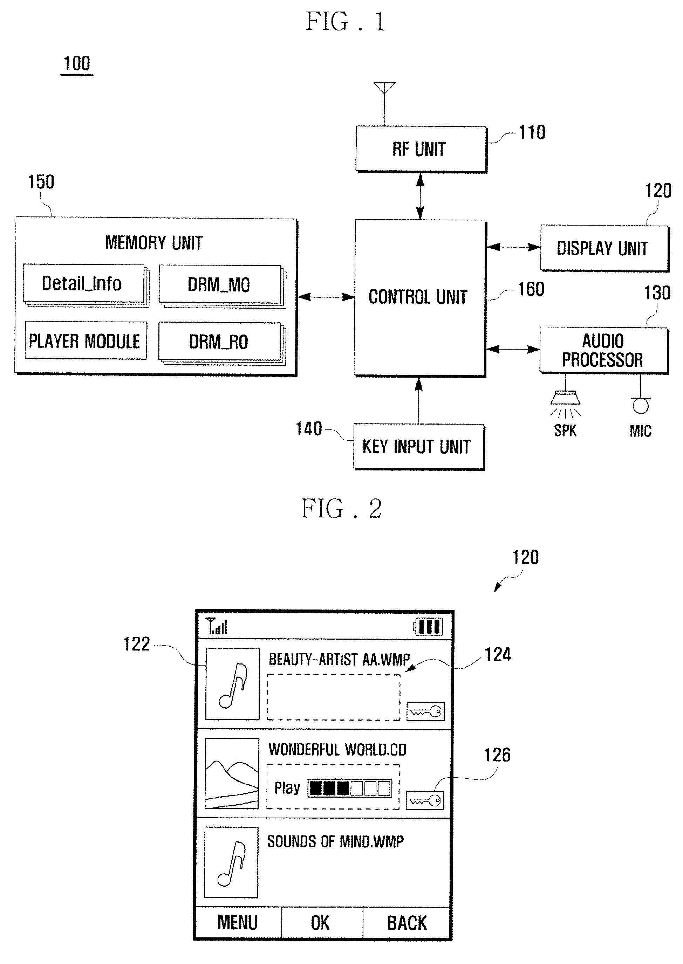

FIG. 1 illustrates a configuration of a mobile terminal 100 according to an embodiment of the present invention.

Referring to FIG. 1, the mobile terminal 100 includes a radio frequency (RF) unit 110, display unit 120, audio processor 130, key input unit 140, memory unit 150, and control unit 160.

The RF unit 110 establishes a wireless communication channel to a corresponding base station for placing a voice call or transmitting data to another mobile terminal. The RF unit 110 also performs communication operations to connect to a Web server for reception therefrom of digital content including DRM content. In an alternative embodiment, the RF unit 110 further includes an RF transmitter for up-converting the frequency of a signal to be transmitted and amplifying the signal, and an RF receiver for low-noise amplifying a received signal and down-converting the frequency of the received signal.

In particular, the RF unit 110 is configured to download DRM content DRM_MO and associated licenses DRM_RO from a content-providing server. If the RF unit 110 includes a short range communication module, the short range communication module scans a short range to locate available resources, such as a printer, and sends a scan result to the control unit 160.

The display unit 120 displays various menus of the mobile terminal 100, information input by the user, and requests for information to be provided to the user. In an alternative embodiment, the display unit 120 further includes a panel having a plurality of liquid crystal display (LCD) devices. If the panel includes a touch screen capability, the display unit 120 can also act as an input means.

In particular, according to a user request the display unit 120 displays a content list of at least one DRM content DRM_MO stored in the memory unit 150 according. Using text and images, the display unit 120 also displays in a pre-set area thereof at least one detailed information Detail_Info, also stored on the device, about the DRM content DRM_MO. Display of the detailed information Detail_Info is described below in connection with FIGS. 2 to 9.

The memory unit 150 stores at least one DRM content DRM_MO and at least one associated license (DRM_RO), and a player module for playing the at least one DRM content DRM_MO. In response to a play request for the at least one DRM content DRM_MO, the memory unit 150 sends the player module to the control unit 160. The memory unit 150 includes a program memory section and a data memory section.

The program memory section stores an operating system for booting the mobile terminal 100, the player module for playing the at least one DRM content DRM_MO, and at least one application program for supplementary functions corresponding to photographing and playing of audio and video data. When one of these functions is activated in response to a user request, the mobile terminal 100 executes the at least one corresponding application program under the control of the control unit 160.

The data memory section stores user data generated as a result of operation of the mobile terminal 100, and stores the at least one DRM content DRM_MO and the corresponding at least one associated license DRM_RO. The data memory section also stores data related to supplementary functions for videos, audios, and phonebooks. The data memory section further stores at least one detailed information Detail_Info about the DRM contents DRM_MO in addition to the corresponding at least one license DRM_RO. The at least one detailed information Detail_Info is associated with at least one of the at least one DRM content and with the corresponding at least one license DRM_RO. For example, the detailed information Detail_Info for a given DRM content includes various information items selected from the group consisting of file size, file type, file name, play duration, and play restriction. The detailed information Detail_Info is sent to the control unit 160 and displayed in part or whole when a content list of the at least one DRM content DRM_MO is displayed. The data memory section further stores images, such as and icon representing the at least one information item, in the detailed information Detail_Info. An icon includes a changing image characterizing a detailed information item and values of the detailed information item. For example, if the at least one detailed information Detail_Info is a 'play' restriction item, a corresponding image can be a graph indicating the ratio of the remaining number of plays to the allowed number of plays (a play rights value).

The audio processor 130 reproduces an audio signal such as a voice signal through a speaker SPK, and sends an audio signal such as a voice signal received through a microphone MIC to the control unit 160. In particular, the audio processor 130 reproduces an audio signal from the at least one DRM content DRM_MO.

The key input unit 140 includes a plurality of alphanumeric and function keys for inputting alphanumeric information and setting various functions. The function keys include direction, side, and shortcut keys associated with particular functions. The key input unit 140 sends a key signal, generated by the user for setting and controlling operations of the mobile terminal 100, to the control unit 160.

In particular, the key input unit 140 sends a key signal indicating selection of a DRM content DRM_MO in a content list in display to the control unit 160. The selected DRM content DRM_MO can be, for example, highlighted for clear distinction from other DRM content. When the selected DRM content DRM_MO is reselected through the key input unit 140, a key signal corresponding to a play command is sent to the control unit 160. Movement in the content list and selection of a DRM content DRM_MO is made through inputting direction keys, numeric keys and special keys, and a newly selected DRM content DRM_MO is highlighted.

The control unit 160 controls the overall operation of the mobile terminal 100 and signal exchange between internal elements thereof. In an alternative embodiment, the control unit 160 further includes a modulator/demodulator (modem) and a coder/decoder (codec) to process data stored in the memory unit 150, and voice signals and data received by the RF unit 110.

In particular, the control unit 160 controls display of menus and selected menu items related to display of the detailed information Detail_Info. That is, in response to a key signal for viewing a content list of at least one DRM content DRM_MO, the control unit 160 controls display of the content list on the display unit 120. The control unit 160 reads detailed information Detail_Info about the at least one DRM content DRM_MO in the content list, and controls display of the detailed information Detail_Info using text and images. In an alternative embodiment of this process, the control unit 160 controls the display operation such that only a portion is displayed of the detailed information Detail_Info directly associated with the at least one DRM content DRM_MO selected through the key input unit 140. In a further alternative embodiment, the control unit 160 also controls the display operation such that portions are displayed of the detailed information Detail_Info mapped to key signals. In yet another alternative exemplary embodiment, the control unit 160 further controls the display operation to display an information item in the detailed information Detail_Info for a pre-set time duration and then switches to display another information item. In still another alternative embodiment, the control unit 160 further controls the display operation to display as bubble text a portion of the detailed information Detail_Info associated with a selected at least one DRM content DRM_MO.

Although only elements necessary for the operation of the present invention are shown in FIG. 1, the present invention is not limited to such a configuration. Any and all of the alternative embodiments of the mobile terminal 100 of FIG. 1 can further include any one of a camera module and digital broadcast receiving module, depending upon the design.

Hereinabove, configurations for displaying detailed DRM content information is described. Next, embodiments for the screen interface of a display unit for displaying detailed DRM content information are described in connection with FIGS. 2 to 9C.

FIG. 2 illustrates a screen layout for a method for displaying detailed DRM content information, according to another exemplary embodiment of the present invention.

Referring to FIG. 2, the display unit 120 displays a content list of DRM content DRM_MO. For the purposes of description only, DRM_MO comprises three DRM contents and the corresponding content list is displayed on the display unit 120, however, the present invention is not so limited thereto. DRM contents DRM_MO can be organized as a list and a matrix in alternative embodiments. A new DRM content of DRM_MO that is not yet displayed can be displayed on the display unit 120 according to input of a direction key or scroll key. On the display unit 120, information of each DRM content of DRM_MO is displayed in an area having an icon zone 122, detailed information zone 124, and a DRM indicator zone 126.

The icon zone 122 is used to display an image indicating the type of a corresponding DRM content of DRM_MO such as audio, video or text. For example, a musical note is displayed in the icon zone 122 for the content type of audio. A title picture is displayed in the icon zone 122 for the content type of video. A file name is displayed in the icon zone 122 for the content type of text.

The DRM indicator zone 126 is used to indicate whether the current content is a DRM content. If the current content is a DRM content, a key or other DRM-content-indicating icon is displayed in the DRM indicator zone 126.

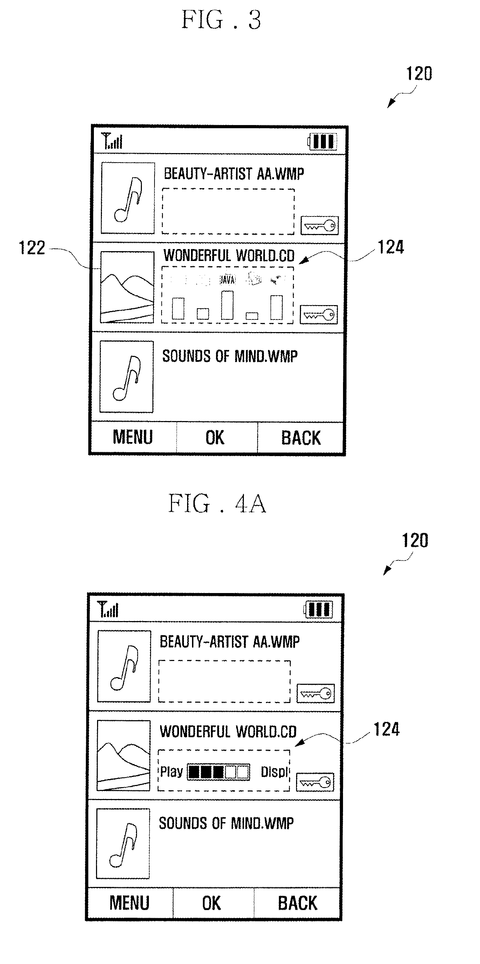

The detailed information zone 124 is used to display detailed information of Detail_Info about a corresponding DRM content of DRM_MO. The detailed information Detail_Info is displayed in a manner selected from the group consisting of a collective manner, a sliding manner, a bubble text manner, a periodic manner, an icon-based manner, and a key-directed manner, which is now described in connection with FIGS. 3 to 9.

FIG. 3 is a screen representation illustrating display of detailed DRM content information in a collective manner.

Referring to FIG. 3, in the collective display a plurality of information items of the detailed information Detail_Info are displayed together at the same time in the detailed information zone 124, i.e., they are displayed collectively. The information items may relate to restrictions on, for example, view, replay, execution, print, and export of the corresponding content. The control unit 160 creates an icon for each information item and stores the created icon in the memory unit 150. For example, the control unit 160 may create a viewfinder image, replay image, execute extension image, printer image, and port image, corresponding to view restriction, replay restriction, execution restriction, print restriction, and export restriction, respectively, and store the created images in the memory unit 150 as icons. The control unit 160 controls a display operation to display corresponding pairs of icon and information item in the detailed information zone 124 so that the remaining rights value of each information item is represented. For example, in the detailed information zone 124 of the display unit 120, an information item is represented as a bar whose length is in proportion to the remaining rights value of the information item. That is, a long bar indicates that the corresponding right in the license contained in DRM_RO has a long remaining duration or a large remaining number of uses before expiration, and a short bar indicates that the corresponding right in the license contained in DRM_RO has a short remaining duration or a small remaining number of uses before expiration. These are by way of example only and are not the only means of indicating a remaining duration.

FIGS. 4A to 4C are screen representations illustrating display of detailed DRM content information in a sliding manner, in an embodiment.

In the sliding display, displayed information items of the detailed information Detail_Info are preferably moved in a pre-set direction. In the description, a move is made in a right-to-left direction, for example. However, the present invention is not limited thereto. Other possible directions including but not limited to, are a left-to-right, up-to-down direction, or down-to-up direction are also possible, but the present invention is not limited to these directions and any direction of movement is possible.

Referring to FIG. 4A, while a first information item, namely, the 'play' information item in the detailed information Detail_Info is being moved from the central portion of the detailed information zone 124 to the left portion thereof, a second information item, namely, the 'display' information item, is being moved from the right portion of the detailed information zone 124 to the central portion thereof. That is, the display unit 120 displays a state in which the first information item and the second information item are shifted from right to left in sequence or simultaneously. The bar for the first information item indicates the remaining number of playable dates or the remaining number of plays.

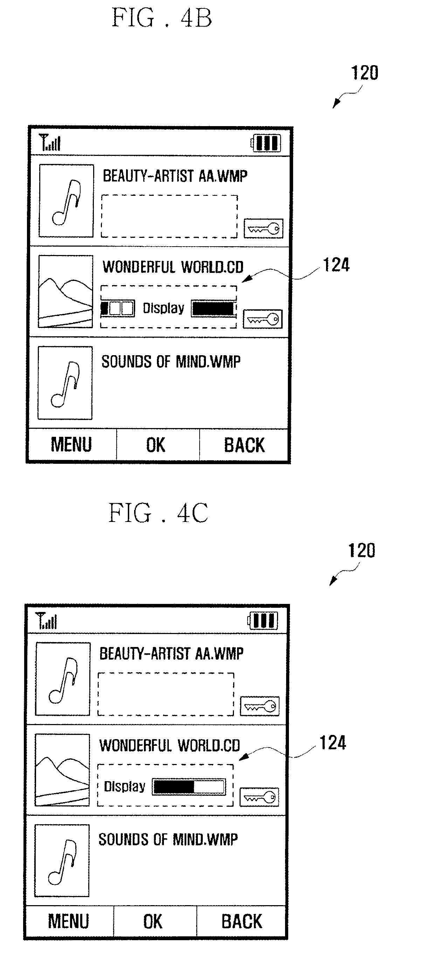

For the example case given above of continuous direction from right to left, at some time later, as illustrated in FIG. 4B, the first information item is moved to the left portion of the detailed information zone 124, and the second information item is moved to the central portion thereof. That is, the display unit 120 displays a right portion of the first information item in the detailed information zone 124, and the label 'Display' of the second information item at the central portion thereof. The bar for the second information item indicates the remaining number of displayable dates or the remaining number of displays therefor, and is displayed on the right side of the label 'Display'.

After sliding, as illustrated in FIG. 4C, the second information item, as a pair comprising a label 'Display' and a bar representing a corresponding display right, is displayed in the detailed information zone 124. After a pre-set time duration, the second information item is left-shifted in a manner that is similar to the case of the first information item, and a third information item moves from right to left in the detailed information zone 124. Here, if the detailed information Detail_Info contains only the first information item and the second information item, the display unit 120 redisplays the first information item, instead of a third information item, and moves it from right to left. The sliding display can be applied to all DRM contents DRM_MO in the content list or to a selection from the DRM contents DRM_MO.

As described above, the sliding display enables simultaneous display of various information items of the detailed information Detail_Info in multiple detailed information zones 124 on the display unit 120. In addition, information items are displayed in this sliding manner from right to left periodically at regular intervals, enabling the user to easily identify the detailed information Detail_Info. The right-to-left direction is used for explanation purposes only and the invention is not so limited. Whatever direction is being used is maintained during periodic displays of Detail_Info.

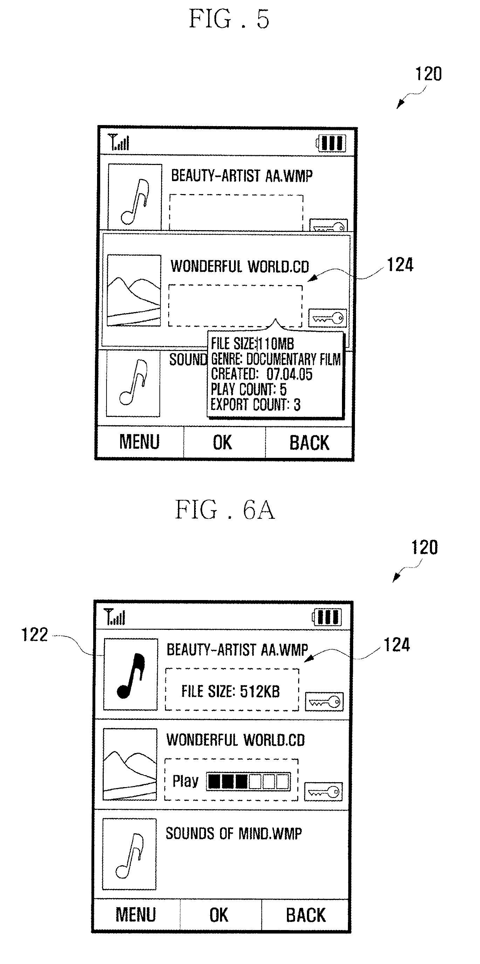

FIG. 5 is a screen representation illustrating display of detailed DRM content information using a bubble text.

In FIG. 5, the display unit 120 displays DRM_MO having a content list of three DRM contents, and the central one of the three DRM contents of DRM_MO is selected and highlighted. FIG. 5 uses a box outline to indicate highlighting, but the actual display is not so limited and the highlighted areas of the display might be brighter or a different color or flash, for example. The display unit 120 can also display the selected DRM content of DRM_MO in larger size type than neighboring DRM contents in the content list, to achieve the purpose of highlighting in yet another embodiment. The display unit 120 displays the detailed information included in Detail_Info about the selected DRM content of DRM_MO as a bubble text 501. In the bubble text 501, information items of the detailed information included in Detail_Info are listed in order of a priority pre-set or pre-assigned by the user. Those information items that cannot be displayed, owing to the screen size limitation, are hidden and then displayed as an abbreviation mark. That is, information items such as file sizes, genres, created dates and play counts are displayed first, and other information items such as print counts and transmission counts are hidden but their existence in indicated by, for example, ellipses (...).

In the bubble text display, selection of a particular DRM content of DRM_MO that appears in the displayed content list results in display of the corresponding detailed information included in Detail_Info about the selected DRM content of DRM_MO.

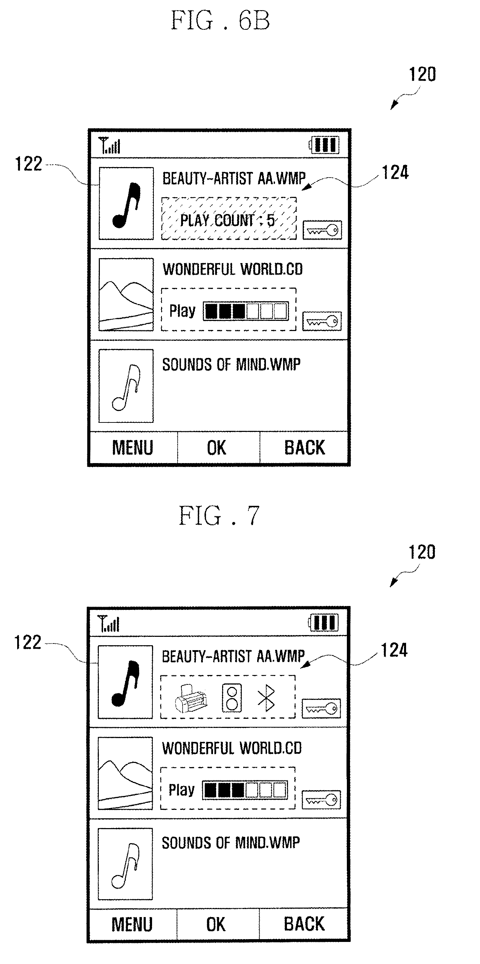

FIGS. 6A and 6B are screen representations illustrating display of detailed DRM content information in a periodic manner.

Referring to FIG. 6A, for a DRM content of DRM_MO, the display unit 120 includes an icon zone 122 in which an image of a musical note is displayed, a title zone in which the title of the DRM content of DRM_MO is displayed, a detailed information zone 124 in which an information item such as the 'file size' item is displayed, and a DRM indicator zone. Preferably, the icon zone 122 is used to display an image that indicates the type of the DRM content of DRM_MO for easy identification of attributes of the DRM content of DRM_MO that is being displayed. The detailed information zone 124 is used to display an information item of the detailed information Detail_Info that corresponds to the DRM content being displayed. In FIG. 6A, the 'file size' information item is displayed, and other information items that are present in Detail_Info, such as 'play count', 'display count' and 'print count', are displayed sequentially.

After a pre-set time duration, the information item being displayed in the detailed information zone 124 is changed to a different information item such as 'play count'. The time duration is set by the designer in advance and can be reset by the user. After another time duration, a next new information item is displayed, or the 'file size' information item is displayed again if only the 'file size' and 'play count' information items corresponding to the DRM content being displayed are present in the detailed information Detail_Info.

The periodic display can be applied to all DRM contents of DRM_MO or to a selected DRM content of DRM_MO according to a user request. The corresponding detailed information Detail_Info is displayed using text in FIGS. 6A and 6B, and may also be displayed using images such as bars.

FIG. 7 is a screen representation illustrating display of detailed DRM content information using available services icons. Available services are represented using icons in the detailed information zone in FIG. 7, and can also be visually represented using text and other entities comparable to icons.

Referring to FIG. 7, for a DRM content of DRM_MO, the display unit 120 includes an icon zone 122 in which an image of a musical note is displayed, a title zone in which the title of the DRM content of DRM_MO is displayed, a detailed information zone 124 in which information items of the Detail_Info corresponding to the displayed DRM content are displayed as icons, and a DRM indicator zone. Preferably, the icon zone 122 is used to display an image that is indicative of the type of the DRM content of DRM_MO being displayed, for easy identification of attributes thereof.

Whenever a content list of DRM_MO is displayed there is a current DRM content. The corresponding detailed information zone 124 is used to display information regarding available services of the mobile terminal 100. For example, if it is determined that a printer is available, after scanning the range of the mobile terminal 100, an icon representing the availability of the printing service is displayed in the detailed information zone 124. In addition, an image or a number representing the 'print' rights (or the remaining 'print' count) can be displayed next to the printing service icon. Similarly, if the mobile terminal 100 is connected to an external audio unit and the current DRM content of DRM_MO permits external audio output, an icon representing the availability of the external audio output service can be displayed in the detailed information zone 124 corresponding to the current DRM content. Further, if the mobile terminal 100 has a short-range communication capability and the current DRM content of DRM_MO permits short-range communication, an icon representing the availability of short-range communication can be displayed in the detailed information zone 124 corresponding to the current DRM content. That is, the detailed information zone 124 is used to indicate the available services using images or text according to the services capabilities of the mobile terminal 100 and usage rights of the current DRM content of DRM_MO. If available services cannot be indicated all together in the detailed information zone 124, previously described display methods such as the sliding display, bubble text display, and periodic display are used in the detailed information zone 124 to display these other services.

Using available services icons, the user can identify all available services related to a particular DRM content of DRM_MO according to capabilities of the mobile terminal 100 and usage rights of the particular DRM content of DRM_MO.

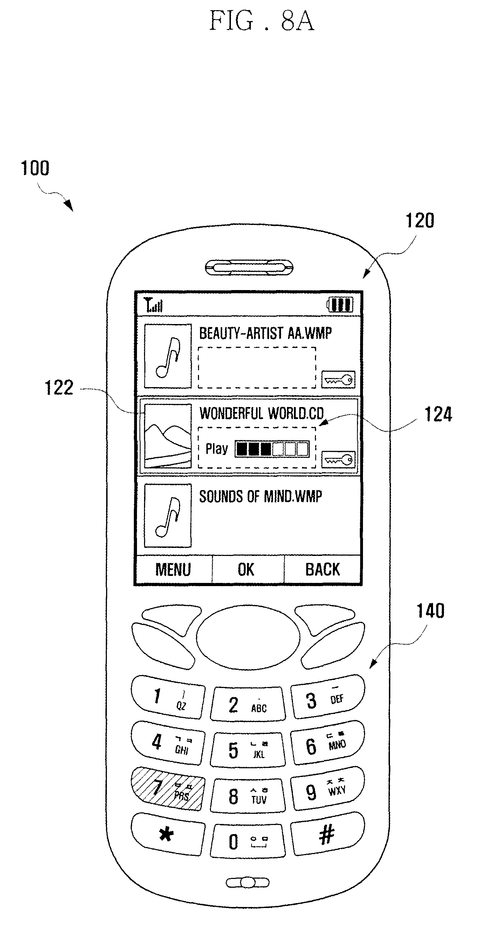

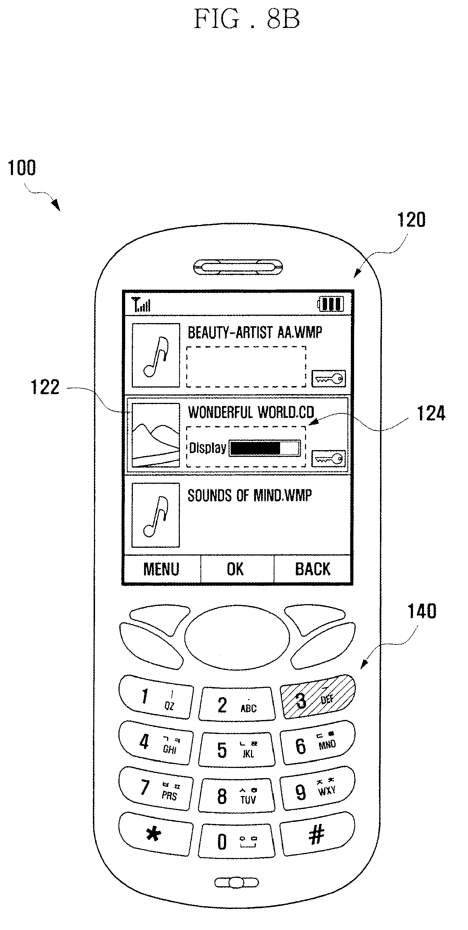

FIGS. 8A and 8B illustrate display of detailed DRM content information using the key input unit 140 of the mobile terminal 100.

The mobile terminal 100 includes the display unit 120 for displaying a content list, and the key input unit 140 for selecting a DRM content of DRM_MO in the content list and pointing to detailed information Detail_Info about the selected DRM content of the content list of DRM_MO.

Referring to FIG. 8A, in an exemplary embodiment the display unit 120 displays a plurality of DRM contents of DRM_MO, the central one of the displayed DRM contents of DRM_MO is shown as having been selected by the user. The selected DRM content of DRM_MO is highlighted, e.g., through one of an outline and color reversal, for clearly indicating that this DRM content has been selected. For each DRM content of DRM_MO included in a content list being displayed, the display unit 120 includes an icon zone 122 in which is displayed an image representing the type of the DRM content of DRM_MO, a title zone in which is displayed the title of the DRM content DRM_MO, a detailed information zone 124 in which is displayed the detailed information Detail_Info, and a DRM indicator zone in which an indication is displayed that this item corresponds to a DRM content. The detailed information zone 124 is used to display an information item mapped to a particular key of the key input unit 140. For example, when the character 'P' is input through the key input unit 140, the display unit 120 can display in the detailed information zone 124the label 'Play' and a bar representing the remaining play right of the selected DRM content DRM_MO.

The 'play' information item of the detailed information Detail_Info can be displayed as a default. Thereafter, as illustrated in FIG. 8B, when the character 'D' is input, the display unit 120 can display in the detailed information zone 124 the label 'Display' and a bar representing the remaining display right to the selected DRM content of DRM_MO.

Further, in this exemplary embodiment, additional information items can be mapped to characters or words. For example, characters 'C', 'T', and 'X' can be respectively mapped to information items 'exeCute', 'prinT', and 'eXport'. If a single key has two or more mappings, an information item is preferably mapped to the first mapping of the key.

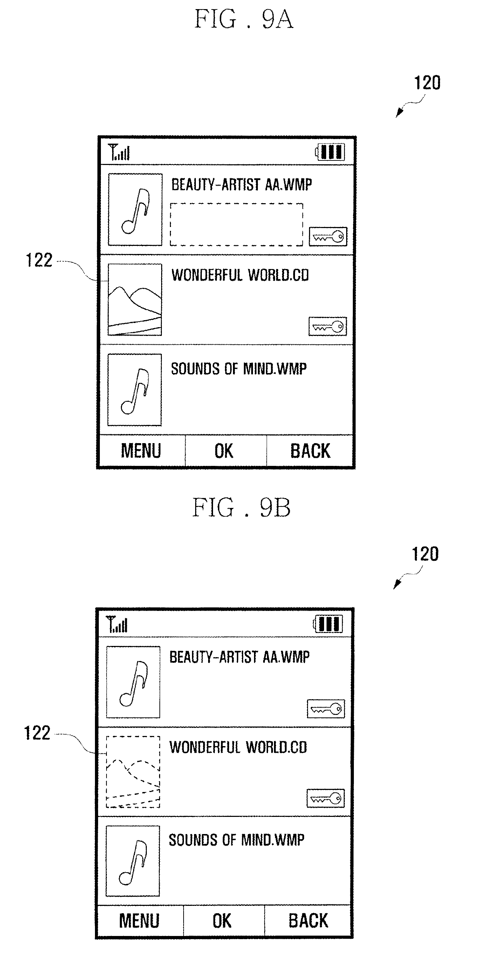

FIGS. 9A to 9C illustrate an exemplary embodiment of a display of detailed DRM content information through changes in brightness of icons and color saturation of icons.

Referring to FIG. 9A, the display unit 120 displays a list of three DRM contents of DRM_MO. For the first DRM content of DRM_MO, the display unit 120 includes an icon zone in which an image of a musical note representing the type of the DRM content of DRM_MO that is displayed, a title zone in which the title "beauty-artist AA.wmp" is displayed, and a DRM indicator zone. For the second DRM content of DRM_MO, the display unit 120 includes an icon zone 122 in which an image of mountains is displayed, a title zone in which the title "wonderful world.CD" is displayed, and a DRM indicator zone. For the third DRM content of DRM_MO, the display unit 120 includes an icon zone in which an image of a musical note is displayed, and a title zone in which the title "sounds of mind.wmp" is displayed. The following description is focused on the second DRM content of DRM_MO.

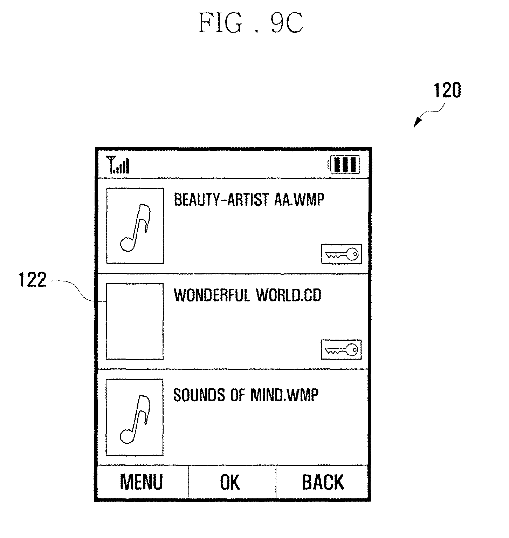

Referring to FIG. 9B, for the second DRM content of DRM_MO, the image in the icon zone 122 is less distinct than that in FIG. 9B, meaning that the 'display' rights or 'play' rights are reduced. That is, the distinction (brightness or saturation) of the image in the icon zone 122 is in proportion to the remaining number of displays or plays. Hence, if the image in the icon zone 122 of FIG. 9A corresponds to the maximum number of 100 for the display or play rights, the image in the icon zone 122 of FIG. 9B can correspond to the remaining number of 50. Similarly, as illustrated in FIG. 9C, the icon zone 122 without a distinctive image indicates that the remaining number of displays or plays is zero.

As described above, in an embodiment changes in brightness or saturation of the image in the icon zone 122 are preferably used to represent the remaining usage rights.

The display method of FIGS. 9A to 9C can be applied to multiple DRM contents of DRM_MO of a content list displayed on the display unit 120 or to a selected DRM content of DRM_MO according to alternative embodiments.

Further, remaining usage rights can be represented by vibration alerts. That is, for a selected DRM content of DRM_MO displayed in a content list, if the remaining number of usage counts in a particular right is less than or equal to a preset number, a vibration alert is preferably issued. For example, if the allowed number of plays is 20, the control unit 160 preferably issues a vibration alert when the remaining number of plays is 1 or 2. If the allowed number of playable days is 100, the control unit 160 preferably issues a vibration alert when the remaining number of playable days is 1 or 2.

As apparent from the above description, the present invention provides a mobile terminal and method that can display detailed information regarding DRM contents in an intuitive and direct manner for the user.

While exemplary embodiments of the present invention have been shown and described in this specification, it will be understood by those skilled in the art that various changes or modifications of the embodiments are possible without departing from the spirit and scope of the invention as defined by the appended claims.

## Claims

1. A method for displaying digital rights management (DRM) contents of at least one DRM content stored in a mobile terminal having a display unit, comprising:
displaying on the display unit a content list comprising the at least one stored DRM content; and
displaying on the display unit detailed information and licenses of the at least one stored DRM content of the displayed content list in zones associated therewith.

2. The method of claim 1, wherein the detailed information comprises at least one type of information item selected from the group consisting of at least one attribute of the at least one DRM content and at least one usage right selected from the group consisting of play, display, execute, print, export, and transmit the at least one DRM content through short-range communication.

3. The method of claim 2, wherein the displaying detailed information further comprises one step selected from the group consisting of displaying at least one information item associated with the at least one DRM content in the displayed content list, and displaying at least one information item associated with a selected DRM content of the displayed content list.

4. The method of claim 3, wherein the displaying detailed information further comprises:
displaying a first item of the at least one information item; and
when more than one item exists, displaying, subsequent to a pre-set time duration after display of the first item, a second item of the at least one information item different from the first information item instead of the first information item.

5. The method of claim 4, wherein the displaying detailed information further comprises displaying a rights value selected from the group consisting of a rights value of the first item using one of an image and text and a rights value of the second item using one of an image and text.

6. The method of claim 3, wherein the displaying detailed information further comprises:
displaying in a zone a first item of the at least one information item; and
when more than one item exists, displaying in the zone, subsequent to a pre-set time duration after display of the first item, a second item of the at least one information item that is different from the first item in the zone while shifting the first information item and the second information item simultaneously in a single direction.

7. The method of claim 6, wherein the displaying detailed information further comprises displaying a rights value of the first item using an image or text and, when the second item exists, a rights value of the second item using an image or text.

8. The method of claim 3, wherein the displaying detailed information further comprises:
displaying an icon corresponding to a selected one of the at least one information item; and
displaying a rights value of the selected at least one information item next to the icon using an image or text.

9. The method of claim 3, wherein the displaying detailed information further comprises:
selecting a DRM content in the displayed contents list; and
displaying a bubble text describing at least one information item associated with the selected DRM content.

10. The method of claim 3, wherein the displaying detailed information further comprises:
scanning a range of the mobile terminal;
determining an availability of external resources in the scanned range; and
when at least one available external resource is determined, performing the steps of:
- determining which available external resource is valid for which displayed DRM content of the content list, and
- displaying at least one of a text and an image to represent the at least one determined valid available external resource in zones for corresponding DRM contents.

11. The method of claim 3, wherein the displaying detailed information further comprises:
mapping each of the detailed information items to at least one key value;
receiving a key value from a user;
finding each information item mapped to the received key value; and
displaying each found information item in a zone for a corresponding DRM content of the content list.

12. The method of claim 3, wherein the displaying detailed information further comprises:
displaying an image representing the information item;
finding a rights value corresponding to the information item; and
changing at least one of brightness and saturation of the image representing the information item in accordance with the found rights value.

13. The method of claim 1, further comprising issuing a vibration alert if a found rights value of a DRM content in the content list is less than or equal to a pre-set value, a vibration alert.

14. A mobile terminal for displaying digital rights management (DRM) contents, comprising:
a memory unit for storing at least one DRM content;
a display unit for displaying a content list of the at least one DRM content; and
a control unit for controlling a display operation to display detailed information regarding the displayed at least one DRM content in zones for the at least one DRM content, wherein the detailed information is related to at least one of attributes of the at least one DRM content and licenses of the at least one DRM content.

15. The mobile terminal of claim 14, wherein the detailed information comprises at least one information item selected from the group consisting of attributes of the at least one DRM content of the content list and rights to play, display, execute, print, and export the at least one DRM content.

16. The mobile terminal of claim 15, wherein the control unit controls the display operation to perform one of the steps selected from the list consisting of displaying at least one information item associated with each DRM content in the content list, or displaying at least one information item associated with a selected DRM content of the content list.

17. The mobile terminal of claim 16, wherein the control unit controls the display operation to display the at least one information item in a sliding manner in which the at least one information item being displayed is moved in corresponding zones in a single direction.

18. The mobile terminal of claim 16, wherein the control unit controls the display operation to display a first image representing a selected information item, and to display a second image representing a rights value of the selected information item next to the first image.

19. The mobile terminal of claim 16, wherein the control unit controls the display operation to display a text representing a selected information item, and to display an image representing a rights value of the selected information item.

20. The mobile terminal of claim 16, wherein the control unit controls the display operation to display a bubble text describing at least one information item associated with a selected DRM content of the content list in a zone for the selected DRM content.

21. The mobile terminal of claim 16, wherein the control unit scans a range of the mobile terminal to check an availability of external resources, and controls the display operation to display at least one information item corresponding to the availability of external resources that is valid in connection with the at least one DRM content using at least one of an image and text.

22. The mobile terminal of claim 16, wherein the control unit controls the display operation to display an image representing a selected information item, finds a rights value of the selected information item, and controls the display operation to change at least one of brightness and saturation of the image according to the found rights value.

23. The mobile terminal of claim 16, wherein the control unit checks a rights value of a selected information item, and issues a vibration alert if the rights value is less than or equal to a pre-set value.
